# EUROPEAN PATENT SPECIFICATION

(11) **EP 1 912 275 B1**
(45) Date of publication and mention of the grant of the patent: **09.09.2015**
(21) Application number: 07014163.5
(22) Date of filing: 19.07.2007
(51) Int. Cl.: H01G 11/56, H01M 10/052, H01M 10/0565, H01M 10/0525

(54) **Gel-typed polymer electrolyte containing diacryl amide-based polymeric material and electrochemical device comprising the same**
Gelartiges Polymer-Elektrolyt mit Diacrylamid-basiertem Polymermaterial und elektrochemische Vorrichtung damit
Electrolyte de polymère de type gel contenant un matériau polymérique à base d'amide diacryle et dispositif électrochimique l'incorporant

(30) Priority: 25.09.2006 KR 20060092597
(43) Date of publication of application: 16.04.2008
(73) Proprietor: LG CHEM, LTD., Seoul 150-721 (KR)
(72) Inventor: Ryu, Suyoung, Daejeon 305-727 (KR); Kim, Eun Young, Seoul 151-850 (KR); Sung, Joo-Hwan, Daejeon 302-120 (KR); Kim, Dongmyung, Daejeon 302-280 (KR)
(74) Representative: Hoffmann Eitle

(56) References cited:
- EP-A- 1 796 198
- WO-A-2004/068618
- KR-B1- 100 403 806
- US-A1- 2004 018 431
- US-A1- 2007 148 519
- KIM H-S ET AL: "ELECTROCHEMICAL PROPERTIES OF LI ION POLYMER BATTERY WITH GEL POLYMER ELECTROLYTE BASED ON POLYURETHANE" JOURNAL OF APPLIED ELECTROCHEMISTRY, SPRINGER, DORDRECHT, NL, vol. 33, no. 6, June 2003 (2003-06), pages 491-496, XP001211615 ISSN: 0021-891X
- KIM ET AL: "Synthesis and electrochemical performances of di(trimethylolpropane) tetraacrylate-based gel polymer electrolyte" JOURNAL OF POWER SOURCES, ELSEVIER, AMSTERDAM, NL, vol. 146, no. 1-2, 26 August 2005 (2005-08-26), pages 584-588, XP005076693 ISSN: 0378-7753
- DIAS F B ET AL: "Trends in polymer electrolytes for secondary lithium batteries" JOURNAL OF POWER SOURCES, ELSEVIER, AMSTERDAM, NL, vol. 88, no. 2, June 2000 (2000-06), pages 169-191, XP004199257 ISSN: 0378-7753
- KIM H-S ET AL: "Electrochemical properties of poly(tetra ethylene glycol diacrylate)-based gel electrolytes for lithium-ion polymer batteries" JOURNAL OF POWER SOURCES, ELSEVIER, AMSTERDAM, NL, vol. 119-121, 1 June 2003 (2003-06-01), pages 482-486, XP004430218 ISSN: 0378-7753
- KIM H-S ET AL: "Electrochemical performances of gel polymer electrolytes using tetra(ethylene glycol) diacrylate" CHEMICAL ENGINEERING SCIENCE, OXFORD, GB, vol. 58, no. 9, May 2003 (2003-05), pages 1715-1720, XP004419830 ISSN: 0009-2509

## Description

### FIELD OF THE INVENTION

The present invention relates to a gel polymer electrolyte containing a diacrylamide-based polymeric material and a secondary battery comprising the same. More specifically, the present invention relates to a secondary battery which is capable of achieving a significant reduction of thickness swelling by incorporation of a certain diacrylamide-based polymeric material into an electrolyte solvent and is also capable of achieving improved safety of the battery by prevention of electrolyte leakage from the battery.

### BACKGROUND OF THE INVENTION

Technological development and increased demand for mobile equipment have led to a rapid increase in the demand for batteries as an energy source. In order to cope with such a trend, a great deal of research and study has been focused on batteries which are capable of meeting various demands. Among other things, there has been an increasing demand for lithium secondary batteries such as lithium-ion batteries, lithium-ion polymer batteries and the like, which have high-energy density, high-discharge voltage and superior power output stability.

Generally, lithium secondary batteries may be classified into lithium-ion batteries containing liquid electrolytes per se, lithium-ion polymer batteries containing liquid electrolytes in the form of gels, and lithium polymer batteries containing solid electrolytes, depending upon types of electrolytes to be employed. Particularly, the lithium-ion polymer batteries (or gel polymer batteries) have various advantages such as high safety due to lower probability of fluid leakage as compared to liquid electrolyte batteries, and feasible ultra-thinning and compactness of the battery shape and substantial weight reduction of the battery, which thereby lead to increased demands thereof.

As representative methods for fabrication of the lithium-ion polymer battery, there are largely a fabrication method of a non-crosslinked polymer battery and a fabrication method of a directly-crosslinked polymer battery, depending upon kinds of matrix material for electrolyte impregnation. As the polymer matrix material, acrylate-and methacrylate-based materials having excellent radical polymerization reactivity, and ether-based materials having superior electrical conductivity are largely used. In particular, the latter directly-crosslinked polymer battery fabrication method is a method of fabricating a battery by placing a Jelly-roll type or stack type electrode assembly composed of electrode plates and a porous separator in a pouch, injecting a thermally polymerizable polyethylene oxide (PEO)-based monomer or oligomer crosslinking agent and an electrolyte composition thereto, and thermally curing the injected materials. The thus-fabricated battery has advantages of manufacturing processes in that plates and separators of conventional lithium-ion batteries can be directly employed without particular modifications or alterations. However, this method is known to suffer from disadvantages in that when the crosslinking agent is not completely cured and remained in the electrolyte, it is difficult to achieve uniform impregnation due to an increased viscosity, thereby significantly decreasing characteristics of the battery.

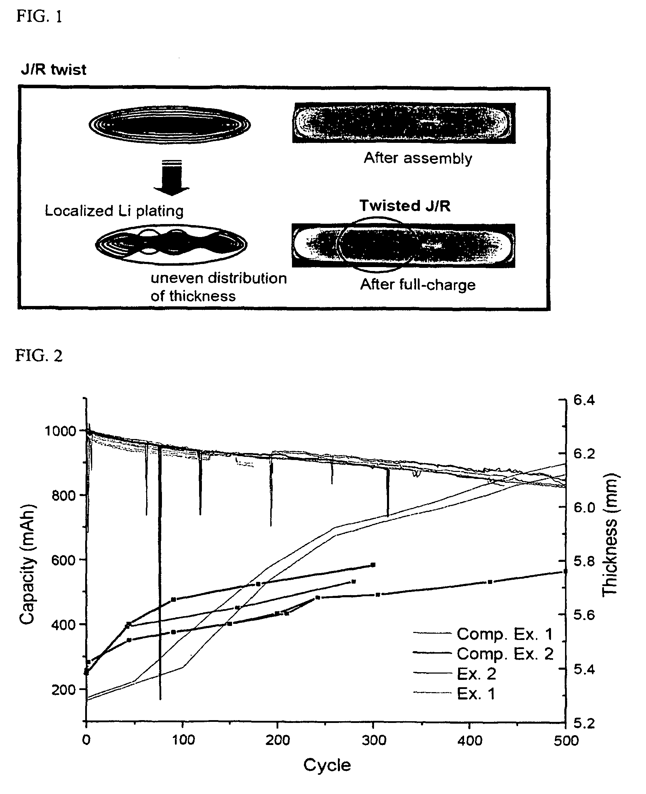

Further, secondary batteries containing such a gel polymer electrolyte suffer from problems associated with deterioration of the battery safety due to leakage of the electrolyte which results from the occurrence of localized swelling of the battery thickness due to the precipitation of lithium metals from an anode during repeated charge/discharge cycles of the battery, since uniform distribution of the electrolyte into the electrode assembly is not achieved (see FIG. 1).

Therefore, there is a strong need in the art for the development of a technology which is capable of securing the battery safety by preventing the thickness swelling while maintaining the battery performance.

J. Appl. Electrochem. 33, 496 (2003) discloses a gel polymer electrolyte comprising a polyurethane acrylate synthesized from a polyol (a random copolymer of propylene oxide and ethylene oxide) and 4,4'-dicyclohexylmethane diisocyanate.

WO-A-2004/068 618; US-A-2004/018 431; KR-A-2003/075 365; J. Power Sources 146, 584 (2005); J. Power Sources 88, 169 (2000); J. Power Sources 119-21, 482 (2003); and Chem. Eng. Sci. 58, 1715 (2003) disclose gel polymer electrolytes comprising acrylate compounds.

EP-A-1 796 198, which is prior art under Article 54(3) and (4) EPC 1973, discloses a polymer electrolyte membrane comprising a polymer matrix. The polymer matrix comprises a cross-linked curable oligomer having the formula CR₁R₂=CR₃COO(CH₂CH₂O)ₚCOCH=CR₁R₂, wherein R₁-R₃ are each independently a hydrogen atom or a C₁₋₁₂ alkyl group and p is an integer from 3 to 14.

### SUMMARY OF THE INVENTION

Therefore, it is an object of the present invention to solve the above problems, and other technical problems that have yet to be resolved.

As a result of a variety of extensive and intensive studies and experiments to solve the problems as described above, the inventors of the present invention have surprisingly discovered that, upon the preparation of a gel polymer electrolyte via thermal polymerization using diacrylamide monomers and/or oligomers, it is possible to secure the battery safety by significant suppression of thickness swelling of the battery to thereby prevent the electrolyte leakage, while having capacity performance comparable to that of conventional batteries utilizing liquid electrolytes. The present invention has been completed based on these findings.

A first aspect of the present invention is a gel polymer electrolyte comprising a diacrylamide compound as a precursor for formation of a crosslinked polymer, the diacrylamide compound being a monomer represented by Formula I or an oligomer thereof: 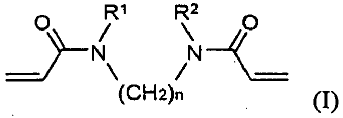 wherein R¹ and R² are each independently hydrogen or an unsubstituted or substituted C₁-C₆ alkyl group, and R¹ and R² may together form a saturated or unsaturated ring; and
n is an integer of 0 to 4, wherein a direct bond is formed if n is 0.

A second aspect of the present invention is an electrochemical device comprising a gel polymer electrolyte according to the first aspect.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a view depicting an increase of a battery cell thickness in a conventional prismatic battery cell with respect to repeated cycles; and
FIG. 2 is a graph showing changes in charge capacity and battery cell thickness with respect to increasing cycles, in test of Experimental Example 1 using batteries fabricated in Examples and Comparative Examples.

### DETAILED DESCRIPTION OF PREFERRED EMBODIMENTS

In accordance with an aspect of the present invention, the above and other objects can be accomplished by the provision of a gel polymer electrolyte comprising a diacrylamide compound as a precursor for formation of a crosslinked polymer wherein the diacrylamide compound is a monomer represented by Formula I or an oligomer thereof. That is, the gel polymer electrolyte of the present invention comprises the electrolyte in the form of gel, using, as a matrix material, a crosslinked polymer formed by crosslinking of the diacrylamide compound as the precursor.

Therefore, it is possible to prevent the electrolyte leakage by inhibiting the thickness swelling of the battery resulting from the precipitation of lithium metals from an anode during repeated charge/discharge cycles of the battery, due to non-uniform distribution of the electrolyte into the electrode assembly, consequently improving the safety of the battery containing such an electrolyte.

More specifically, the diacrylamide compound has acrylamide groups and therefore exhibits high reactivity with radicals. Therefore, it is believed that the diacrylamide compound improves electrochemical stability of the final gel polymer electrolyte via an improved extent of reaction. Consequently, because a contact area of the electrolyte in contact with electrodes is decreased upon repeating charge/discharge of the battery, the thickness swelling of the battery is suppressed by inhibition of side reactions between the electrodes and the electrolyte arising from the decreased contact area of the electrolyte in contact with the electrodes, and by the reduced vapor pressure due to a gel polymer form of the electrolyte.

Further, it is possible to minimize degradation of the battery performance, since there is no dissociation and decreased migration of lithium ions, which may occur in conventional gel polymer electrolytes, due to the presence of the polar functional groups, i.e. acrylamide groups.

The crosslinked polymer utilized in the present invention refers to crosslinked products formed by polymerization of the diacrylamide monomer, an oligomer thereof, or the monomer and oligomer. That is, the crosslinked polymer of the present invention may be formed by crosslinking polymerization of the monomers or oligomers alone, or otherwise may be formed by simultaneous crosslinking polymerization of both the monomer and oligomer. As used herein, the term "oligomer" refers to a low-polymerization degree, linear polymer consisting of more than two monomers and having a viscosity to an extent that can be injected in the form of a solution.

However, single use of the oligomer compound may lead to a difficulty to control physical properties, whereas single use of the monomer may result in a difficulty to obtain desired levels of mechanical properties. Therefore, a mixture of the high-molecular weight oligomeric compound and the monomeric compound may be preferably used to overcome such problems. In this case, a mixing ratio of the monomer and the oligomer may be in the range of 10:90 to 90:10 (w/w).

Particularly preferred examples of the diacrylamide compound include monomers represented by Formulae II and III below, and oligomers thereof:

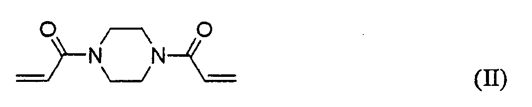

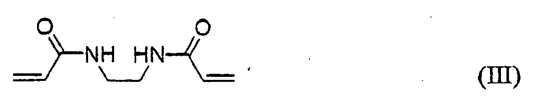

The above-mentioned compounds according to the present invention may be easily prepared by those skilled in the art, based on the chemical structure thereof, and therefore the details of preparation thereof are not provided herein.

In one preferred embodiment, the gel polymer electrolyte may further comprise a compound that is polymerizable with the diacrylamide compound as a precursor for formation of a crosslinked polymer.

There is no particular limit to the above-polymerizable compound, as long as such a compound is polymerizable with the diacrylamide compound. Preferably, mention may be made of (meth)acrylic ester compounds, unsaturated carboxylic compounds, vinyl compounds and mixtures thereof without being limited thereto.

There is no particular limit to the (meth)acrylic ester compounds, as long as they contain acrylate group(s). Preferred are compounds containing two or more acrylate groups in the molecular structure.

In one preferred embodiment, the (meth)acrylic ester compounds having two or more acrylate groups in the molecular structure may be diacrylate compounds.

According to the results of the experiments conducted by the present inventors, it was confirmed that more flexible physical properties can be obtained upon preparation of the gel polymer electrolyte, by the combined use of a diacrylate compound in conjunction with the diacrylamide compound. That is, the gel polymer electrolyte is obtained which has combination of electrochemical properties and mechanical properties of each material, by the co-use of the diacrylamide compound having superior binding force with the diacrylate compound having superior elasticity, as a precursor of a crosslinked polymer.

Of course, the diacrylate compound, in conjunction with the diacrylamide compound, may form various forms of copolymers, for example random copolymers, block copolymers, graft copolymers and the like.

Preferred examples of the diacrylate compound may include, but are not limited to, monomers represented by Formula IV below, and oligomers thereof: 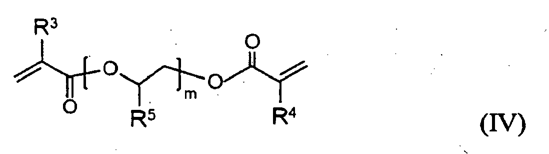 wherein R³, R⁴ and R⁵ are each independently hydrogen, or an unsubstituted or substituted C₁-C₄ alkyl; and
m is an integer of 1 to 20.

Examples of the (meth)acrylic ester compounds having two or more acrylate groups in the molecular structure may include, but are not limited to, diethylene glycol diacrylate (Di(EG)DA), diethylene glycol dimethacrylate (Di(EG)DM), ethylene glycol dimethacrylate (EGDM), dipropylene glycol diacrylate (Di(PG)DA), dipropylene glycol dimethacrylate (Di(PG)DM), ethylene glycol divinyl ether (EGDVE), ethoxylated (6) trimethylolpropane triacrylate (ETMPTA), diethylene glycol divinyl ether (Di(EG)DVE), triethylene glycol dimethacrylate (Tri(EG)DM), dipentaerythritol pentaacrylate (DPentA), trimethylolpropane triacrylate (TMPTA), trimethylolpropane trimethacrylate (TMPTM), propoxylated (3) trimethylolpropane triacrylate (PO(3)TMPTA), propoxylated (6) trimethylolpropane triacrylate (PO(6)TMPTA), poly(ethylene glycol)diacrylate (PA1, Mn = 700, see Formula III), poly(ethylene glycol) dimethacrylate and mixtures thereof.

Preferably, the gel polymer electrolyte contains a polymerization initiator, an electrolyte and a lithium salt.

Examples of the polymerization initiator may include azo compounds such as 2,2-azobis(2-cyanobutane), 2,2-azobis(methylbutyronitrile), 2,2'-azoisobutyronitrile (AIBN), azobisdimethyl-valeronitrile (AMVN) and the like, peroxy compounds such as benzoyl peroxide, acetyl peroxide, dilauryl peroxide, di-tert-butyl peroxide, cumyl peroxide, hydrogen peroxide and the like, and hydroperoxides. Preferably, AIBN, 2,2'-azobis(2,4-dimethyl valeronitrile) (V65), Di-(4-tert-butylcyclohexyl)-peroxydicarbonate (DBC), or the like may be employed.

The polymerization initiator is decomposed at a certain temperature of 40 to 80 °C to form radicals, and may react with monomers via the free radical polymerization to form a gel polymer electrolyte. Generally, the free radical polymerization is carried out by sequential reactions consisting of the initiation involving formation of transient molecules having high reactivity or active sites, the propagation involving re-formation of active sites at the ends of chains by addition of monomers to active chain ends, the chain transfer involving transfer of the active sites to other molecules, and the termination involving destruction of active chain centers. On the other hand, it is, of course, possible to carry out polymerization without use of the polymerization initiator.

The electrolyte may also serve as a plasticizer. As examples of the electrolyte that can be used in the present invention, mention may be made of non-protic organic solvents such as N-methyl-2-pyrollidinone, propylene carbonate (PC), ethylene carbonate (EC), butylene carbonate (BC), dimethyl carbonate (DMC), diethyl carbonate (DEC), ethylmethyl carbonate (EMC), gamma-butyrolactone, 1,2-dimethoxy ethane, tetrahydroxy Franc, 2-methyl tetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivatives, sulfolane, methyl sulfolane, 1,3-dimethyl-2-imidazolidinone, propylene carbonate derivatives, tetrahydrofuran derivatives, ether, methyl propionate and ethyl propionate. These materials may be used alone or in any combination thereof.

The lithium salt is a material that is dissolved in the non-aqueous electrolyte to thereby resulting in dissociation of lithium ions. Examples of the lithium salt may include, for example, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, (CF₃SO₂)₂NLi, chloroborane lithium, lower aliphatic carboxylic acid lithium, lithium tetraphenyl borate and imide. These materials may be used alone or in any combination thereof.

Additionally, in order to improve charge/discharge characteristics and flame retardancy, for example, pyridine, triethylphosphite, triethanolamine, cyclic ether, ethylenediamine, n-glyme, hexaphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxy ethanol, aluminum trichloride or the like may be added to the electrolyte. If necessary, in order to impart incombustibility, the electrolyte may further include halogen-containing solvents such as carbon tetrachloride and ethylene trifluoride. Further, in order to improve high-temperature storage characteristics, the electrolyte may additionally include carbon dioxide gas.

Since the gel polymer electrolyte according to the present invention is included in the gel-type, instead of a liquid phase, the ratio of the electrolyte : the crosslinked polymer formed by crosslinking of the diacrylamide compound is important in order to achieve uniform application of the electrolyte to the electrodes.

Although there is no particular limit to a content of the diacrylamide compound, it is preferred to contain the diacrylamide compound in an amount of 0.1 to 10% by weight based on the total weight of the electrolyte.

Where the ratio of the crosslinked polymer is lower than 0.1% by weight, it is not easy to form a gel polymer, consequently resulting in significant swelling of the battery which occurs upon use of the liquid electrolyte, and it may also be difficult to prepare a matrix material having a given thickness. On the other hand, where the content of the crosslinked polymer exceeds 10% by weight, an increased density of the gel polymer may lead to a decreased transfer rate of lithium ions, which in turn causes the precipitation of lithium ions, consequently resulting in the deterioration of the battery performance, and may also lead to an increased viscosity, thereby presenting a difficulty to achieve uniform application thereof to target sites. Addition of the diacrylate compound to the diacrylamide compound also suffers from the same problems as described above. That is, the total weight of the diacrylamide compound and the diacrylate compound is preferably 1 to 10% by weight, based on the total weight of the electrolyte.

In accordance with another aspect of the present invention, there is provided an electrochemical device comprising the above-mentioned gel polymer electrolyte.

The electrochemical device encompasses all kinds of devices that undergo electrochemical reactions. As specific examples of the electrochemical device, mention may be made of all kinds of primary batteries, secondary batteries, fuel cells, solar cells, capacitors and the like. Preferred are secondary batteries.

Generally, the secondary battery is fabricated by inclusion of the electrolyte in an electrode assembly composed of a cathode and an anode, which are faced opposite to each other with a separator therebetween.

The cathode is, for example, fabricated by applying a mixture of a cathode active material, a conductive material and a binder to a cathode current collector, followed by drying and pressing. If necessary, a filler may be further added to the above mixture.

The cathode current collector is generally fabricated to have a thickness of 3 to 500 µm. There is no particular limit to materials for the cathode current collector, so long as they have high conductivity without causing chemical changes in the fabricated battery. As examples of the materials for the cathode current collector, mention may be made of stainless steel, aluminum, nickel, titanium, sintered carbon, and aluminum or stainless steel which was surface-treated with carbon, nickel, titanium or silver. The current collector may be fabricated to have fine irregularities on the surface thereof so as to enhance adhesion to the cathode active material. In addition, the current collector may take various forms including films, sheets, foils, nets, porous structures, foams and non-woven fabrics.

Examples of the cathode active materials that can be used in the present invention may include, but are not limited to, layered compounds such as lithium cobalt oxide (LiCoO₂) and lithium nickel oxide (LiNiO₂), or compounds substituted with one or more transition metals; lithium manganese oxides such as compounds of Formula Li₁₊ₓMn₂₋ₓO₄ (0≤x≤0.33), LiMnO₃, LiMn₂O₃ and LiMnO₂; lithium copper oxide (Li₂CuO₂); vanadium oxides such as LiV₃O₈, V₂O₅ and Cu₂V₂O₇; Ni-site type lithium nickel oxides of Formula LiNi₁₋ₓMₓO₂ (M = Co, Mn, Al, Cu, Fe, Mg, B or Ga, and 0.01≤x≤0.3); lithium manganese composite oxides of Formula LiMn₂₋ₓMₓO₂ (M = Co, Ni, Fe, Cr, Zn or Ta, and 0.01≤x≤0.1), or Formula Li₂Mn₃MO₈ (M = Fe, Co, Ni, Cu or Zn); LiMn₂O₄ wherein a portion of Li is substituted with alkaline earth metal ions; disulfide compounds; and Fe₂(MoO₄)₃, LiFe₃O₄, etc.

The conductive material is typically added in an amount of 1 to 50% by weight, based on the total weight of the mixture including the cathode active material. There is no particular limit to the conductive material, so long as it has suitable conductivity without causing chemical changes in the fabricated battery. As examples of conductive materials, mention may be made of conductive materials, including graphite such as natural or artificial graphite; carbon blacks such as carbon black, acetylene black, Ketjen black, channel black, furnace black, lamp black and thermal black; conductive fibers such as carbon fibers and metallic fibers; metallic powders such as carbon fluoride powder, aluminum powder and nickel powder; conductive whiskers such as zinc oxide and potassium titanate; conductive metal oxides such as titanium oxide; and polyphenylene derivatives.

The binder is a component assisting in binding between the active material and conductive material, and in binding with the current collector. The binder is typically added in an amount of 1 to 50% by weight, based on the total weight of the mixture including the cathode active material. As examples of the binder, mention may be made of polyvinylidene fluoride, polyvinyl alcohols, carboxymethylcellulose (CMC), starch, hydroxypropylcellulose, regenerated cellulose, polyvinyl pyrollidone, tetrafluoroethylene, polyethylene, polypropylene, ethylene-propylene-diene terpolymer (EPDM), sulfonated EPDM, styrene butadiene rubber, fluoro rubber and various copolymers.

The filler is an optional ingredient used to inhibit cathode expansion. There is no particular limit to the filler, so long as it does not cause chemical changes in the fabricated battery and is a fibrous material. As examples of the filler, there may be used olefin polymers such as polyethylene and polypropylene; and fibrous materials such as glass fiber and carbon fiber.

The anode is fabricated by applying an anode active material to the anode current collector, followed by drying. If necessary, other components as described above may be further included.

The anode current collector is generally fabricated to have a thickness of 3 to 500 µm. There is no particular limit to materials for the anode current collector, so long as they have suitable conductivity without causing chemical changes in the fabricated battery. As examples of materials for the anode current collector, mention may be made of copper, stainless steel, aluminum, nickel, titanium, sintered carbon, copper or stainless steel having a surface treated with carbon, nickel, titanium or silver, and aluminum-cadmium alloys. Similar to the cathode current collector, the anode current collector may also be processed to form fine irregularities on the surfaces thereof so as to enhance adhesive strength to the anode active material. In addition, the anode current collector may be used in various forms including films, sheets, foils, nets, porous structures, foams and non-woven fabrics.

As examples of the anode active materials utilizable in the present invention, mention may be made of carbon such as non-graphitizing carbon and graphite-based carbon; metal composite oxides such as LiₓFe₂O₃ (0≤x≤1), LiₓWO₂(0≤x≤1) and SnₓMe₁₋ₓMe'_{y}O_{z} (Me: Mn, Fe, Pb or Ge; Me': Al, B, P, Si, Group I, Group II and Group III elements of the Periodic Table of the Elements, or halogens; 0<x≤1; 1≤y≤3; and 1≤z≤8); lithium metals; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; and Li-Co-Ni based materials.

The secondary battery according to the present invention may be, for example, a lithium metal secondary battery, a lithium-ion secondary battery, a lithium polymer secondary battery, lithium-ion polymer secondary battery or the like. The secondary battery may be fabricated in various forms. For example, the electrode assembly may be constructed in a jelly-roll structure, a stacked structure, a stacked/folded structure or the like. The battery may take a configuration in which the electrode assembly is installed inside a battery case of a cylindrical can, a prismatic can or a laminate sheet including a metal layer and a resin layer. Such a configuration of the battery is widely known in the art and therefore the details thereof are omitted herein.

As discussed above, the gel polymer electrolyte is classified into a linear polymer type and a crosslinked polymer type, depending upon the matrix in which the electrolyte is impregnated. The former is a method of fabricating the battery by coating a linear polymer, such as PEO, PAN, PVdF or the like, on the surface of the electrode which is then impregnated by injection of the electrolyte. The latter is a method of fabricating the battery by constructing an electrode assembly, and injecting an electrolyte mixture containing a monomer and/or an oligomer to the electrode assembly, followed by high-temperature gelation.

The secondary battery according to the present invention is fabricated by the latter method as described above. In one preferred embodiment, the secondary battery may be fabricated by a process including:
(1) installing an electrode assembly in a battery case;
(2) injecting a mixture of a crosslinking polymerizable precursor material, a polymerization initiator, an electrolyte and an electrolyte salt into the battery case; and
(3) subjecting the crosslinking polymerizable precursor material to crosslinking polymerization.
   More specifically, the electrode assembly is first mounted in the battery case. To the battery case was injected a mixture composed of a lithium salt-containing electrolyte (a plasticizer) with addition of the polymerization initiator and a given amount of the crosslinking polymerizable precursor material. Thereafter, the resulting structure is heated to about 60°C for 4 to 12 hours to induce a crosslinking reaction via the thermal polymerization, thereby fabricating a secondary battery including the electrolyte in the form of gel.
   Preferably, the crosslinking reaction may be carried out under inert conditions. As a result, since the reaction of radicals with atmospheric oxygen serving as a radical scavenger is fundamentally blocked under inert atmosphere, it is possible to enhance the extent of reaction to a level at which there are substantially no unreacted monomers. Consequently, it is possible to prevent the degradation of the charge/discharge performance which results from the presence of large amounts of the unreacted monomers inside the battery.
   There is no particular limit to the inert atmosphere conditions and therefore known gases with a low reactivity may be employed: For example, at least one selected from the group consisting of nitrogen, argon, helium and xenon may be employed as the inert gas.
   The acrylamide groups of the diacrylamide compound are combined to each other via the crosslinking polymerization to thereby form a crosslinked polymer having a three-dimensional network structure, and the electrolyte is uniformly impregnated in the thus-formed polymer.
   The crosslinked polymer electrolyte is electrochemically stable and therefore can be stably present in the battery without being damaged, even after charge/discharge cycles are repeated. As a result, it is possible to improve the battery safety and obtain excellent mechanical properties such as excellent elongation and bending properties. Further, the deterioration of the battery performance can be minimized owing to continuous migration and transfer of lithium ions in the electrolyte via the gel polymer electrolyte having a polarity.
   In one preferred embodiment, in addition to the above-mentioned steps, the fabrication process of the battery may further include:
(4) formation for activation of the battery; and
(5) aging for stabilization of the activated battery.
   The formation step is a process to activate the battery by repeating charge/discharge cycles of the battery. During the formation step, lithium ions liberated from the lithium metal oxide used as the cathode, upon charging of the battery, migrate and intercalate into the carbon electrode used as the anode. Herein, compounds such as Li₂CO₃, LiO, LiOH and the like, which are produced by the reaction of the highly-reactive lithium metal with the carbon anode, form a solid electrolyte interface (SEI) film on the anode surface. In addition, the aging step is a stabilization process of the battery activated in the formation step by allowing to stand for a given period of time.
   Conditions for the formation step and the aging step are not particularly limited, and may be adjusted to within conventional ranges well known in the art.
   In a specific embodiment, the mixture is injected into the battery case (primary injection) and the battery structure is allowed to stand for a given period of time (for example, 3 hours) such that uniform impregnation of the mixture into the battery case is achieved, and the injected mixture is subjected to thermal polymerization under the above-specified conditions, followed by charge to activate the battery. In the activation charge step of the battery, gases generated upon formation of a protective film for the anode are removed, and a given amount of the mixture is replenished (secondary injection). Thereafter, the battery structure is again stood for a given period of time (for example, 12 hours) and subjected to the activation charge, thereby fabricating a finished battery.

### EXAMPLES

Now, the present invention will be described in more detail with reference to the following Examples. These examples are provided only for illustrating the present invention and should not be construed as limiting the scope and spirit of the present invention.

### [Example 1]

### Preparation of non-aqueous electrolyte containing lithium salt

1M LiPF₆ was added to a non-aqueous electrolyte solvent composed of a mixture of ethylene carbonate (EC), ethylmethyl carbonate (EMC) and diethyl carbonate (DEC) (4:3:3, w/w). Based on the weight of the electrolyte, 1.5% by weight of vinylene carbonate (VC), 0.5% by weight of propylene sulfone (PS), 2 mol% of AIBN as a polymerization initiator, and 2% by weight of ethylene diacrylamide represented by Formula 3 hereinbefore were added to the resulting mixture to thereby prepare a non-aqueous electrolyte.

### Fabrication of cathode

Using LiCoO₂ as a cathode active material, a cathode slurry was prepared by adding a cathode mix composed of 95.4% by weight of LiCoO₂ having a particle diameter of 18 µm, 1.6% by weight of Super-P (conductive material) and 3% by weight of PVDF (binder) to NMP (N-methyl-2-pyrrolidone) as a solvent. Thereafter, the resulting cathode slurry was coated on an aluminum current collector, to thereby fabricate a cathode.

### Fabrication of anode

Graphite as an anode active material and about 3.5% by weight of PVDF were added to NMP to thereby prepare an anode slurry. Thereafter, the resulting anode slurry was coated on a copper current collector to thereby fabricate an anode.

### Fabrication of lithium-ion polymer secondary cell

A separator was disposed between the thus-fabricated cathode and anode to fabricate an electrode assembly. Then, the electrode assembly was mounted into a prismatic can to which 2 g of the mixture was then injected via an inlet, thereby fabricating a 523450 prismatic battery. Then, crosslinking polymerization was carried out by heating the resulting prismatic battery in an oven purged with nitrogen gas, at a temperature of 60°C for 4 to 12 hours.

### [Example 2]

A secondary battery was fabricated in the same manner as in Example 1, except that piperazine diacrylamide of Formula II and polyethylene glycol diacrylate (Mn = 700, Aldrich) were added in an amount of 2% by weight, instead of ethylene diacrylamide.

### [Comparative Example 1]

A secondary battery was fabricated in the same manner as in Example 1, except that polyethylene glycol diacrylate was added, instead of ethylene diacrylamide.

### [Comparative Example 2]

A secondary battery was fabricated in the same manner as in Example 1, except that ethylene diacrylamide was not added and therefore a heating process was not carried out.

### [Experimental Example 1]

Batteries fabricated in Examples 1 and 2 and Comparative Examples 1 and 2 were charged to 4.2 V at a charge rate of 1C, 50 mA (cut off), and discharged to 3 V (cut off) at a discharge rate of 1C. These charge/discharge cycles were repeated 500 times at room temperature. Meanwhile, for checking the capacity of the batteries, the fabricated batteries were aged for 5 days at room temperature after fabrication thereof. Immediately after the examination of battery capacity, cycle tests were carried out.

Changes in the charge capacity and battery thickness for 300 to 500 cycles were measured, respectively. The thus-obtained results are shown in FIG. 2.

As shown in FIG 2, it can be seen that even though they are gel polymer battery systems, the batteries according to the present invention (Examples 1 and 2) exhibit a capacity almost comparable to that of lithium-ion secondary battery (Comparative Example 2) which corresponds to a liquid electrolyte battery system of a conventional art.

Further, it can also be seen that the batteries according to the present invention (Examples 1 and 2) exhibit a significant reduction of thickness swelling, as compared to the conventional lithium-ion secondary battery (Comparative Example 2) as well as a lithium-ion polymer battery (Comparative Example 1) composed of a diacrylate-based material.

More specifically, the batteries of Examples 1 and 2 according to the present invention exhibited a thickness of about 5.65 and 5.60 mm at 200 cycles, respectively, whereas the batteries of Comparative Examples 1 and 2 exhibited a thickness of about 5.75 to 5.80 mm after the same cycles, thus representing that there is a significant thickness difference of up to 0.2 mm therebetween. In particular, it can be seen that the battery of Example 2, involving the combined use of the diacrylamide compound and the diacrylate compound as the crosslinking polymerization precursor, exhibited a significant reduction of thickness swelling.

### INDUSTRIAL APPLICABILITY

As apparent from the above description, a secondary battery comprising a gel polymer electrolyte according to the present invention enables significant improvements of the battery life and safety by significant suppression of thickness swelling to thereby prevent the electrolyte leakage, while having capacity and cycle characteristics almost comparable to those of secondary batteries containing liquid electrolytes.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A gel polymer electrolyte comprising a diacrylamide compound as a precursor for formation of a crosslinked polymer, the diacrylamide compound being a monomer represented by Formula I or an oligomer thereof: 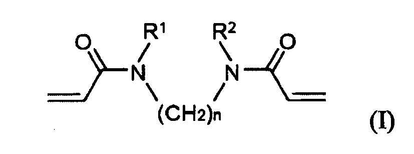 wherein R¹ and R² are each independently hydrogen or an unsubstituted or substituted C₁-C₆ alkyl group, and R¹ and R² may together form a saturated or unsaturated ring; and
n is an integer of 0 to 4, wherein a direct bond is formed if n is 0.

2. An electrolyte according to Claim 1, wherein the diacrylamide compound is a monomer represented by Formula II or Formula III, or an oligomer thereof:

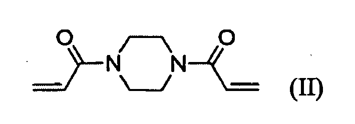

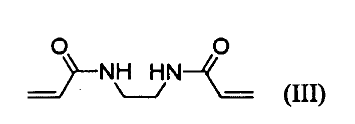

3. An electrolyte according to Claim 1, further comprising a compound that is polymerizable with the diacrylamide compound.

4. An electrolyte according to Claim 3, wherein the polymerizable compound is at least one of a (meth)acrylic ester compound, an unsaturated carboxylic compound and a vinyl compound.

5. An electrolyte according to Claim 4, wherein the (meth)acrylic ester compound is a (meth)acrylate compound containing two or more acrylate groups.

6. An electrolyte according to Claim 5, wherein the (meth)acrylate compound is a diacrylate compound.

7. An electrolyte according to Claim 6, wherein the diacrylate compound is a monomer represented by Formula IV, or an oligomer thereof: 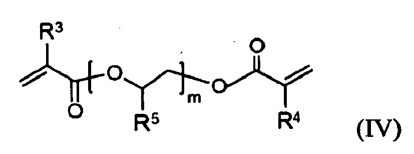 wherein R³, R⁴ and R⁵ are each independently hydrogen or an unsubstituted or substituted C₁-C₄ alkyl group; and
m is an integer of 1 to 20.

8. An electrolyte according to Claim 5, wherein the (meth)acrylic ester compound is at least one of diethylene glycol diacrylate (Di(EG)DA), diethylene glycol dimethacrylate (Di(EG)DM), ethylene glycol dimethacrylate (EGDM), dipropylene glycol diacrylate (Di(PG)DA), dipropylene glycol dimethacrylate (Di(PG)DM), ethylene glycol divinyl ether (EGDVE), ethoxylated (6) trimethylolpropane triacrylate (ETMPTA), diethylene glycol divinyl ether (Di(EG)DVE), triethylene glycol dimethacrylate (Tri(EG)DM), dipentaerythritol pentaacrylate (DPentA), trimethylolpropane triacrylate (TMPTA), trimethylolpropane trimethacrylate (TMPTM), propoxylated (3) trimethylolpropane triacrylate (PO(3)TMPTA), propoxylated (6) trimethylolpropane triacrylate (PO(6)TMPTA), poly(ethylene glycol)diacrylate (PA1) and poly(ethylene glycol) dimethacrylate.

9. An electrolyte according to Claim 1, wherein the gel polymer electrolyte contains a polymerization initiator, an electrolyte (plasticizer) and a lithium salt.

10. An electrolyte according to Claim 1, wherein the diacrylamide compound is contained in the electrolyte in an amount of 1 to 10% by weight based on the total weight of the electrolyte.

11. An electrochemical device comprising a gel polymer electrolyte according to Claim 1.

12. A device according to Claim 11, wherein the device is a secondary battery.

13. A device according to Claim 12, wherein the battery is obtainable by a process comprising:
installing an electrode assembly in a battery case;
injecting a mixture of the crosslinking polymerizable precursor material, a polymerization initiator, an electrolyte and a lithium salt into the battery case, followed by sealing; and
polymerizing the crosslinking polymerizable precursor material.

14. A device according to Claim 13, wherein the process further comprises activation of the battery by repeatedly charging and discharging the battery, and aging of the battery to stabilize it.

## Patentansprüche

1. Gelpolymerelektrolyt, umfassend eine Diacrylamidverbindung als einen Vorläufer zur Bildung eines vernetzten Polymers, wobei die Diacrylamidverbindung ein durch die Formel I dargestelltes Monomer oder ein Oligomer hiervon ist: 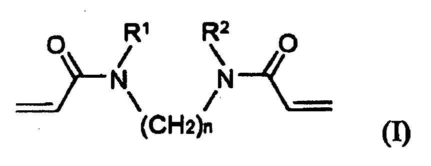 worin R¹ und R² jeweils unabhängig Wasserstoff oder eine unsubstituierte oder substituierte C₁₋₆-Alkylgruppe darstellen und R¹ und R² zusammen einen gesättigten oder ungesättigten Ring bilden können; und
n eine ganze Zahl von 0 bis 4 ist, worin eine direkte Bindung vorliegt, wenn n 0 ist.

2. Elektrolyt gemäß Anspruch 1, worin die Diacrylamidverbindung ein durch die Formel II oder Formel III dargestelltes Monomer oder ein Oligomer hiervon ist:

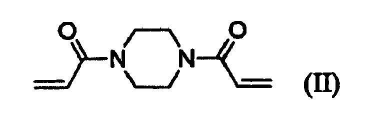

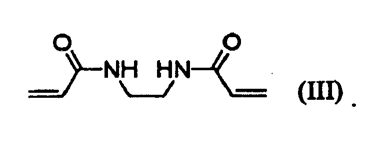

3. Elektrolyt gemäß Anspruch 1, ferner umfassend eine Verbindung, die mit der Diacrylamidverbindung polymerisierbar ist.

4. Elektrolyt gemäß Anspruch 3, worin die polymerisierbare Verbindung mindestens eine von einer (Meth)acrylsäureesterverbindung, einer ungesättigten carboxylischen Verbindung und einer Vinylverbindung ist.

5. Elektrolyt gemäß Anspruch 4, worin die (Meth)acrylsäureesterverbindung eine (Meth)acrylatverbindung ist, die zwei oder mehr Acrylatgruppen enthält.

6. Elektrolyt gemäß Anspruch 5, worin die (Meth)acrylatverbindung eine Diacrylatverbindung ist.

7. Elektrolyt gemäß Anspruch 6, worin die Diacrylatverbindung ein durch die Formel IV dargestellte Monomer oder ein Oligomer hiervon ist: 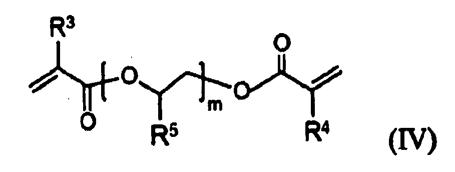 worin R³, R⁴ und R⁵ jeweils unabhängig Wasserstoff oder eine unsubstituierte oder substituierte C₁₋4-Alkylgruppe darstellen; und
m eine ganze Zahl von 1 bis 20 ist.

8. Elektrolyt gemäß Anspruch 5, worin die (Meth)acrylsäureesterverbindung mindestens eine von Diethylenglycol-Diacrylat (Di(EG)DA), Diethylenglycol-Dimethylarylat (Di(EG)DM), Ethylenglycol-Dimethacrylat (EGDM), Dipropylenglycol-Diacrylat (Di(PG)DA), Dipropylenglycol-Dimethacrylat (Di(PG)DM), Ethylenglycol-Divinylether (EGDVE), ethoxyliertes (6) Trimethylolpropan-Triacrylat (ETMPTA), Diethylenglycol-Divinylether (Di(EG)DVE), Triethylenglycol-Dimethacrylat (Tri(EG)DM), Dipentaerythritol-Pentaacrylat (DPentA), Trimethylolpropan-Triacrylat (TMPTA), TrimethylolpropanTrimethacrylat (TMPTM), propoxyliertes (3) Trimethylolpropan-Triacrylat (PO(3)TMPTA), propoxyliertes (6) Trimethylolpropan-Triacrylat (PO(6)TMPTA), Poly(ethylenglycol)-Diacrylat (PA1) und Poly(ethylenglycol)-Dimethacrylat ist.

9. Elektrolyt gemäß Anspruch 1, worin der Gelpolymerelektrolyt einen Polymerisationsinitiator, einen Elektrolyten (Plastifiziermittel) und ein Lithiumsalz enthält.

10. Elektrolyt gemäß Anspruch 1, worin die Diacrylamidverbindung in dem Elektrolyten in einer Menge von 1 bis 10 Gew.% enthalten ist, bezogen auf das Gesamtgewicht des Elektrolyten.

11. Elektrochemische Vorrichtung, umfassend einen Gelpolymerelektrolyten gemäß Anspruch 1.

12. Vorrichtung gemäß Anspruch 11, worin die Vorrichtung eine Sekundärbatterie ist.

13. Vorrichtung gemäß Anspruch 12, worin die Batterie erhältlich ist durch ein Verfahren, umfassend:
Installieren einer Elektrodenanordnung in einem Batteriegehäuse;
Einfüllen einer Mischung des vernetzenden polymerisierbaren Vorläufermaterials, eines Polymerisationsinitiators, eines Elektrolyten und eines Lithiumsalzes in das Batteriegehäuse, gefolgt von Versiegeln; und
Polymerisieren des vernetzenden polymerisierbaren Vorläufermaterials.

14. Vorrichtung gemäß Anspruch 13, worin das Verfahren ferner das Aktivieren der Batterie durch wiederholtes Laden und Entladen der Batterie sowie das Altern der Batterie zum Stabilisieren umfasst.

## Revendications

1. Électrolyte polymère de type gel comprenant un composé diacrylamide comme un précurseur pour la formation d'un polymère réticulé, le composé diacrylamide étant un monomère représenté par la Formule I ou un oligomère de celui-ci : 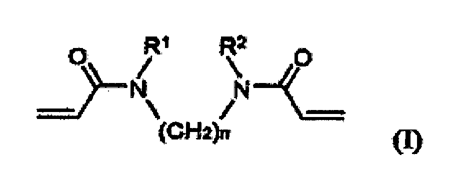 dans laquelle R¹ et R² sont chacun indépendamment un hydrogène ou un groupe alkyle en C₁-C₆ non substitué ou substitué, et R¹ et R² peuvent ensemble former un cycle saturé ou insaturé ; et
n est un entier de 0 à 4, dans laquelle une liaison directe est formée si n est 0.

2. Électrolyte selon la revendication 1, dans lequel le composé diacrylamide est un monomère représenté par la Formule II ou la Formule III, ou un oligomère de celui-ci :

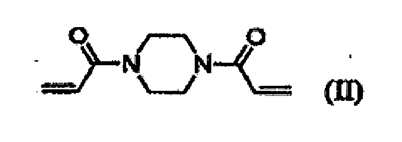

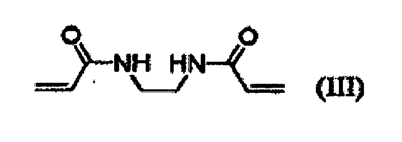

3. Électrolyte selon la revendication 1, comprenant en outre un composé qui est polymérisable avec le composé diacrylamide.

4. Électrolyte selon la revendication 3, dans lequel le composé polymérisable est au moins un parmi un composé ester (méth)acrylique, un composé carboxylique insaturé et un composé vinylique.

5. Électrolyte selon la revendication 4, dans lequel le composé ester (méth)acrylique est un composé (méth)acrylate contenant deux groupes acrylate ou plus.

6. Électrolyte selon la revendication 5, dans lequel le composé (méth)acrylate est un composé diacrylate.

7. Électrolyte selon la revendication 6, dans lequel le composé diacrylate est un monomère représenté par la Formule IV, ou un oligomère de celui-ci : 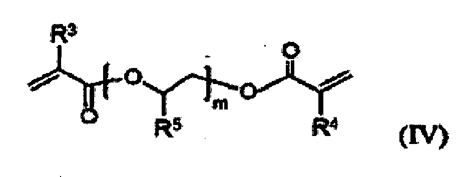 dans laquelle R³, R⁴ et R⁵ sont chacun indépendamment un hydrogène ou un groupe alkyle en C₁-C₄ non substitué ou substitué ; et
m est un entier de 1 à 20.

8. Électrolyte selon la revendication 5, dans lequel le composé ester (méth)acrylique est au moins un parmi un diacrylate de di(éthylène glycol) (Di(EG)DA), un diméthacrylate de di(éthylène glycol) (Di(EG)DM), un diméthacrylate d'éthylène glycol (EGDM), un diacrylate de di(propylène glycol) (Di(PG)DA), un diméthacrylate de di(propylène glycol) (Di(PG)DM), un éther divinylique d'éthylène glycol (EGDVE), un triacrylate de triméthylolpropane éthoxylé (6) (ETMPTA), un éther divinylique de di(éthylène glycol) (Di(EG)DVE), un diméthacrylate de tri(éthylène glycol) (Tri(EG)DM), un pentaacrylate de dipentaérythritol (DPentA), un triacrylate de triméthylolpropane (TMPTA), un triméthacrylate de triméthylolpropane (TMPTM), un triacrylate de triméthylolpropane propoxylé (3) (PO(3)TMPTA), un triacrylate de triméthylolpropane propoxylé (6) (PO(6)TMPTA), un diacrylate de poly(éthylène glycol) (PA1) et un diméthacrylate de poly(éthylène glycol).

9. Électrolyte selon la revendication 1, dans lequel l'électrolyte polymère de type gel contient un initiateur de polymérisation, un électrolyte (plastifiant) et un sel de lithium.

10. Électrolyte selon la revendication 1, dans lequel le composé diacrylamide est contenu dans l'électrolyte dans une quantité de 1 à 10% en poids sur la base du poids total de l'électrolyte.

11. Dispositif électrochimique comprenant un électrolyte polymère de type gel selon la revendication 1.

12. Dispositif selon la revendication 11, dans lequel le dispositif est une batterie secondaire.

13. Dispositif selon la revendication 12, dans lequel la batterie peut être obtenue par un procédé comprenant :
l'installation d'un ensemble d'électrodes dans un boîtier de batterie ;
l'injection d'un mélange du matériau précurseur polymérisable de réticulation, d'un initiateur de polymérisation, d'un électrolyte et d'un sel de lithium dans le boîtier de batterie, suivie d'un scellement ; et
la polymérisation du matériau précurseur polymérisable de réticulation.

14. Dispositif selon la revendication 13, dans lequel le procédé comprend en outre l'activation de la batterie par charge et décharge répétées de la batterie, et le vieillissement de la batterie pour la stabiliser.
